# FASCICULE DE BREVET EUROPEEN

(11) **EP 2 447 835 B1**
(45) Date de publication et mention de la délivrance du brevet: **02.01.2019**
(21) Numéro de dépôt: 11186451.8
(22) Date de dépôt: 25.10.2011
(51) Int. Cl.: G06F 9/445, G06Q 20/34, G07F 7/08

(54) **Procédé de configuration d'une entité électronique**
Konfigurationsverfahren für eine elektronische Vorrichtung
Method for configuring an electronic entity

(30) Priorité: 27.10.2010 FR 1058833
(43) Date de publication de la demande: 02.05.2012
(73) Titulaire: IDEMIA France, 92700 Colombes (FR)
(72) Inventeur: Cau, Philippe, 92110 CLICHY (FR); Rimasson, Mathieu, 82400 COURBEVOIE (FR)
(74) Mandataire: Delumeau, François Guy

(56) Documents cités:
- WO-A1-99/40548

## Description

### Arrière-plan de l'invention

La présente invention concerne la configuration d'entités électroniques telles que des cartes à microcircuit par exemple autrement appelées « cartes à puce », et concerne plus particulièrement les étapes de pré-personnalisation et/ou de personnalisation mises en oeuvre à l'issue de la fabrication d'une carte à microcircuit.

De telles cartes à microcircuit sont utilisées dans de nombreux domaines d'application (télécommunications, applications bancaires...). Elles peuvent notamment permettre à leurs porteurs d'accéder à leurs comptes bancaires, d'effectuer des transactions de paiement ou encore de s'authentifier à l'aide d'un lecteur de carte.

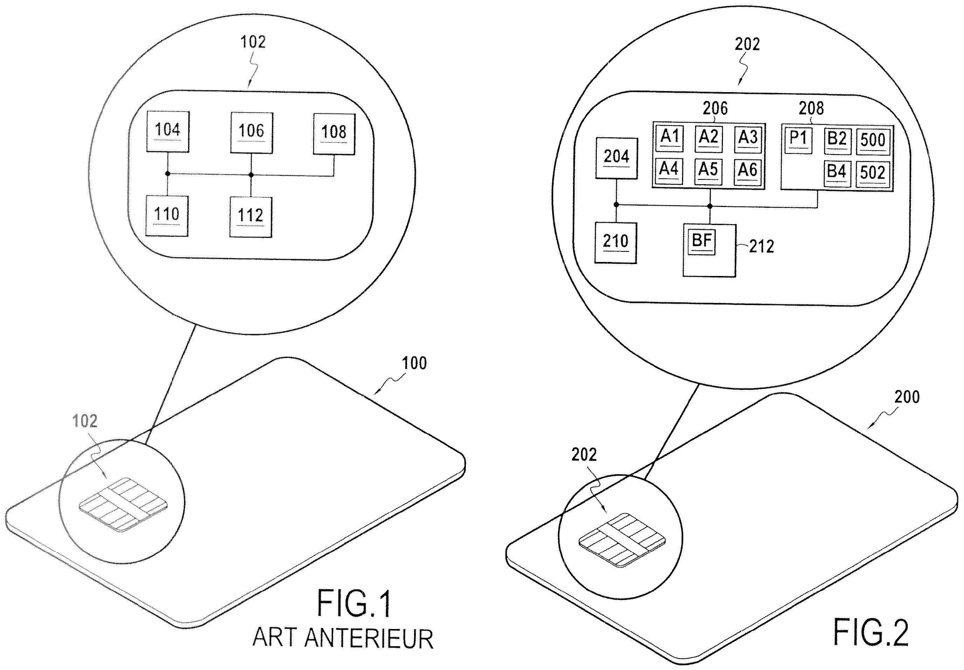

La **figure 1** représente de manière schématique l'architecture matérielle d'une carte à microcircuit 100 conventionnelle.

Plus particulièrement, la carte à microcircuit 100 comprend un microcontrôleur 102 comportant un processeur 104, une mémoire morte 106 (ou mémoire ROM), une mémoire non volatile réinscriptible 108, un port d'entrées et sorties 110 et une mémoire volatile réinscriptible 112 (ou mémoire RAM). Les différents éléments du microcontrôleur 100 sont reliés entre eux par un bus bidirectionnel.

Dans l'exemple envisagé ici, la mémoire non volatile réinscriptible 108 est une mémoire de type EEPROM.

En premier lieu, il convient de rappeler que des données sont généralement intégrées dans la mémoire morte 106 par le fabricant de circuits intégrés lors de la fabrication du microcontrôleur 102. Typiquement, le fabricant inscrit directement dans les dessins des couches de matériau de la mémoire morte 106 des données appropriées. Ces données comprennent, par exemple, le système d'exploitation OS du microcontrôleur ainsi qu'un script de démarrage.

Par ailleurs, de façon connue, une fois la fabrication de la carte à microcircuit 100 achevée, il est nécessaire de configurer la carte, c'est-à-dire, de mémoriser des données dites de configuration dans la mémoire EEPROM 108 du microcontrôleur 102 afin de rendre la carte fonctionnelle. La mémorisation de ces données de configuration dans la mémoire EEPROM 108 s'effectue suivant deux étapes successives dites de pré-personnalisation et de personnalisation.

Une étape de pré-personnalisation consiste à configurer le microcontrôleur 102 de la carte 100 en mémorisant diverses données de pré-personnalisation dans la mémoire EEPROM 108. Typiquement, cette étape de pré-personnalisation permet notamment :
- de choisir, parmi les applications préenregistrées dans la mémoire morte 106, celles qui seront actives sur la carte 100 une fois fonctionnelle. Par exemple, dans le domaine des applications bancaires, il est possible d'activer une application bancaire de type Visa ou MasterCard. Dans le domaine de l'identification de personnes, il est également possible de configurer la mémoire EEPROM 108 afin d'activer une application « passeport » ou « permis de conduire » ;
- de configurer le ou les applications choisies (choisir par exemple le protocole à utiliser : BAC, EAC...) ;
- de choisir la vitesse de communication du microcontrôleur 102 avec un lecteur compatible ;
- de choisir la vitesse de fonctionnement du processeur 104 ;
- de choisir la limite de la taille de la mémoire EEPROM 108.

Après l'étape de pré-personnalisation, on procède généralement à une étape de personnalisation de la carte 100. Au cours de cette étape, des données de personnalisation sont mémorisées dans la mémoire EEPROM 108 du microcontrôleur 102. Les données de personnalisation correspondent à des données personnelles du porteur final de la carte 100. Elles comprennent par exemple au moins une des données suivantes
- nom ;
- prénom ;
- date de naissance ;
- photo du porteur,
- numéro de la carte,
- clé cryptographique de la carte ...

Le plus souvent, l'étape de personnalisation comprend en outre la création d'une arborescence de fichiers dans la mémoire EEPROM 108.

L'écriture des données de pré-personnalisation puis de personnalisation dans la mémoire EEPROM 108 est réalisée au moyen d'un lecteur de carte à microcircuits. Typiquement, ce lecteur de carte envoie une succession de commandes en écriture au microcontrôleur 102 lors des étapes de pré-personnalisation et de personnalisation. Ces commandes contiennent des données que le microcontrôleur 102 doit écrire dans la mémoire EEPROM 108.

En général, ces commandes en écriture sont de type APDU (pour « *Application Protocol Data Unit »*) conforme à la norme ISO 7816-4.

L'une des principales commandes APDU utilisées lors d'une étape de pré-personnalisation est la commande PUT DATA.

D'autre part, les principales commandes APDU utilisées lors de l'étape de personnalisation sont : CREATE FILE et UPDATE BINARY.

Dans une commande PUT DATA ou UPDATE BINARY, les données à écrire sont contenues dans le champ de données « Command data field » de la commande. De même, dans une commande CREATE FILE, le nom du fichier (EFID selon ISO 7816), la taille du fichier, et les conditions d'accès du fichier considéré sont contenues dans le champ de données « Command data field » de la commande.

Ainsi, le microcontrôleur 102 reçoit généralement des dizaines de commandes APDU lors des étapes de pré-personnalisation et de personnalisation, chacune de ces commandes en écriture demandant l'écriture de données particulières (d'un octet par exemple) dans la mémoire EEPROM 108.

De façon générale, le programme d'exécution de la mémoire morte 106 mis en oeuvre par le microcontrôleur 102 lorsqu'une commande APDU est reçue se présente de la manière suivante :
**S100** : Vérification si une authentification du lecteur de carte auprès de la carte 100 a eu lieu avec succès (mise en oeuvre des commande GET CHALLENGE et/ou MUTUAL AUTH, par exemple...) ;
**S110** : Vérification des autorisations associées à la commande APDU reçue, par exemple :
   **S111.** Vérifier que l'état courant de la carte 100 autorise la mise en oeuvre de la commande APDU reçue (les commandes PUT DATA, CREATE FILE et UPDATE BINARY ne sont généralement autorisées qu'en phase de pré-personnalisation et/ou de personnalisation de la carte).
   **S112.** Vérifier que, selon l'authentification effectuée à l'étape 100, la commande APDU reçue peut effectivement être exécutée par la carte.
**S120 :** Appel effectif de la fonction APDU reçue. Cette étape peut comprendre notamment :
   **S121.** Vérification de l'intégrité de la commande APDU reçue. Typiquement, on vérifie une signature de la commande APDU (signature de type MAC, par exemple).
      En général, pour limiter le temps d'exécution de cette étape, on utilise une clef de session identique pour plusieurs commandes APDU.
   **S122.** Déchiffrement des données de configuration à écrire (pour garantir la confidentialité de l'opération).
   **S123.** Copie des données à écrire dans une mémoire tampon de la mémoire RAM 112 dédiée à l'écriture sur la mémoire EEPROM 108.
   **S124.** Appel du driver de la mémoire EEPROM 108 pour écrire le contenu de ladite mémoire tampon dédiée dans la mémoire EEPROM 108.

A noter également que, pour chaque commande APDU reçue, le microcontrôleur 102 doit réaliser un traitement protocolaire (autrement appelé « overhead protocolaire »). Ce traitement protocolaire comprend, par exemple, la vérification, par le microcontrôleur 102, d'un CRC d'une commande ADPU reçue.

Par ailleurs, il est dans certains cas possible de procéder à une reconfiguration de la carte à microcircuit 100 après l'étape de personnalisation, c'est-à-dire, une fois que cette carte est fonctionnelle. Une telle reconfiguration correspond à une étape de post-personnalisation (dite « *post issuance »* en anglais), c'est-à-dire une phase de configuration ultérieure à la phase de personnalisation.

Une étape de post-personnalisation permet de modifier la configuration d'une carte à microcircuit afin, par exemple, de modifier les données personnelles ou l'arborescence de répertoires et fichiers dans cette carte.

Or, le Déposant a observé que la configuration d'une carte à microcircuit lors des étapes de pré-personnalisation, de personnalisation et de post-personnalisation présente un inconvénient majeur en ce qu'elle nécessite un temps d'exécution particulièrement long.

En effet, comme indiqué ci-dessus, pour chaque commande ADPU reçue, le microcontrôleur 102 doit effectuer un certain nombre d'opérations de traitement (authentification de l'émetteur, chiffrement des données à écrire, vérification de l'intégrité des commandes reçues, appel du driver en écriture de la mémoire EEPROM 108...). Chacune de ces opérations nécessite un temps d'exécution non négligeable. Etant donné le nombre important de commandes APDU que reçoit généralement le microcontrôleur 102 lors des étapes de pré-personnalisation et de personnalisation, on comprend que la configuration de la carte 100 peut être particulièrement coûteuse en temps.

En pratique, la fabrication des cartes à microcircuit est en fait soumise à des contraintes de temps très stricts lors des phases de fabrication et de configuration des cartes à microcircuits. Ainsi, plus les étapes de pré-personnalisation et de personnalisation nécessitent un temps de réalisation important, plus le coût des cartes à microcircuit augmente.

Le Déposant a certes noté qu'il serait possible d'augmenter la quantité des données contenues dans chaque commande ADPU envoyées à une carte à configurer. Cependant, l'augmentation des données dans le champ de données des commandes APDU ralentirait considérablement les traitements à effectuer par la carte à microcircuit.

Il existe donc aujourd'hui un besoin pour minimiser le temps nécessaire pour configurer une entité électronique telle qu'une carte à microcircuit par exemple. Il existe plus particulièrement un besoin pour réduire le temps d'exécution :
- des étapes de pré-personnalisation et de personnalisation réalisées par les fabricants sur les cartes à microcircuit afin de rendre celles-ci fonctionnelles,
- des étapes de post-personnalisation pouvant être réalisées sur une carte à microcircuit une fois que celle-ci est fonctionnelle.

Le document de brevet WO 99/40548 A1 datant du 12 août 1999 décrit un procédé de configuration d'une carte à puce comprenant un microprocesseur, une mémoire ROM et une mémoire EEPROM, dans lequel des instructions de programme sont stockées dans la ROM lors de la fabrication et certaines de ces instructions sont exécutées par le système d'exploitation lors du fonctionnement de la carte.

### Objet et résumé de l'invention

A cet effet, la présente invention concerne un procédé de configuration mis en oeuvre par une entité électronique comprenant une mémoire non volatile réinscriptible et une mémoire morte, le procédé comprenant :
la réception d'au moins une commande en écriture pour écrire dans la mémoire non-volatile, et
en réponse à ladite commande, l'écriture dans la mémoire non volatile de données de configuration, le procédé étant caractérisé en ce que les données de configuration sont obtenues à partir de données dites préenregistrées lues dans la mémoire morte.

La présente invention est avantageuse en ce qu'elle permet de réduire considérablement le nombre de commandes en écriture à envoyer à une entité électronique (telle qu'une carte à microcircuit par exemple) pour la configurer, par exemple lors d'une étape de pré-personnalisation, une étape de personnalisation et/ou de post-personnalisation.

En conséquence, le temps d'exécution nécessaire pour configurer une entité électronique telle qu'une carte à microcircuit, lors par exemple d'une étape de pré-personnalisation et/ou de personnalisation, est réduit de manière significative. En effet, dans le cas d'une carte à microcircuit par exemple, l'invention permet de s'affranchir, au niveau de cette carte, d'un grand nombre d'opérations de traitement inhérentes à chaque commande en écriture reçue. La réduction du nombre de commandes envoyées à la carte à configurer permet notamment de limiter le nombre d'opérations de traitement protocolaire, de vérifications de l'intégrité et/ou de la signature de la commande, et de déchiffrements des données.

En outre, grâce à l'invention, il est possible de réduire de manière significative le temps de traitement de chaque commande en écriture reçue par une entité électronique (telle qu'une carte à microcircuit) lors d'une étape de configuration.

L'invention peut ainsi permettre de diminuer avantageusement le coût de production des cartes à microcircuit. L'invention est spécifiée dans les revendications indépendantes jointes.

Le procédé de configuration de l'invention peut comprendre en outre, une étape d'identification des données préenregistrées à partir de la commande reçue. Ce mode de réalisation permet avantageusement à l'entité électronique de sélectionner, parmi toutes celles préenregistrées dans la mémoire morte, les données qu'il faut prendre en compte pour obtenir les données de configuration.

Dans un mode de réalisation particulier, les données de configuration sont les données préenregistrées. Autrement dit, ce sont les données préenregistrées que l'entité électronique écrit en tant que données de configuration dans la mémoire morte.

Selon une alternative, l'entité électronique effectue au moins un traitement des données préenregistrées afin d'obtenir les données de configuration. Dans ce cas, les données de configuration sont obtenues indirectement à partir des données préenregistrées.

Par ailleurs, la commande peut comprendre au moins un identifiant des données préenregistrées. De cette manière, l'entité électronique est capable de récupérer, à partir de cette identifiant, les données préenregistrées.

Dans un mode de réalisation particulier, cet identifiant identifie un registre dans la mémoire morte permettant d'identifier une zone comportant les données préenregistrées. L'entité électronique peut ainsi déterminer, à partir de cet identifiant, la zone mémoire de sa mémoire morte contenant les données préenregistrées.

D'autre part, la commande est de préférence une commande APDU conforme à la norme ISO 7816.

De plus, l'entité électronique peut, par exemple, correspondre à l'une des entités suivantes :
- une carte à microcircuit,
- une clé USB, ou
- un passeport électronique.

Dans un mode de réalisation particulier, une seule commande en écriture est reçue lors de l'étape de réception, les données de configuration étant des données de pré-personnalisation et de personnalisation. De cette manière, il est possible de pré-personnaliser et de personnaliser, à partir d'une seule commande en écriture de l'invention, une entité électronique telle qu'une carte à microcircuit par exemple.

Dans un mode particulier de réalisation, les différentes étapes du procédé de configuration de l'invention sont déterminées par des instructions de programmes d'ordinateurs.

En conséquence, l'invention vise aussi un programme d'ordinateur sur un support d'informations, ce programme étant susceptible d'être mis en oeuvre dans une entité électronique telle qu'une carte à microcircuit, ou plus généralement dans un ordinateur, ce programme comportant des instructions adaptées à la mise en oeuvre des étapes d'un procédé de configuration tel que mentionné ci-dessus.

L'invention vise aussi un support d'enregistrement (ou support d'informations) lisible par un ordinateur, et comportant des instructions d'un programme d'ordinateur tel que mentionné ci-dessus.

Corrélativement, l'invention concerne un procédé de personnalisation, de pré-personnalisation ou de post-personnalisation mis en oeuvre par un dispositif comprenant des moyens de communication avec une entité électronique, le procédé comprenant l'envoi d'une commande pour configurer l'entité électronique selon un procédé de configuration tel que mentionné ci-dessus.

Dans un mode particulier de réalisation, les différentes étapes du procédé de personnalisation, de pré-personnalisation ou de post-personnalisation sont déterminées par des instructions de programmes d'ordinateurs.

En conséquence, l'invention vise aussi un programme d'ordinateur sur un support d'informations, ce programme étant susceptible d'être mis en oeuvre dans un dispositif tel qu'un lecteur de carte à microcircuit, ou plus généralement dans un ordinateur, ce programme comportant des instructions adaptées à la mise en oeuvre des étapes d'un procédé de pré-personnalisation ou de personnalisation tel que décrit ci-dessus.

L'invention vise aussi un support d'enregistrement (ou support d'informations) lisible par un ordinateur, et comportant des instructions d'un programme d'ordinateur tel que mentionné ci-dessus.

A noter que les programme mentionnés ci-avant peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention concerne en outre une entité électronique comprenant une mémoire non volatile réinscriptible, une mémoire morte, des moyens de réception d'au moins une commande en écriture pour écrire dans la mémoire non-volatile et des moyens de traitement pour écrire, en réponse à la commande, des données de configuration dans la mémoire non volatile. Dans cette carte :
les moyens de traitement sont aptes à obtenir les données de configuration à partir de données dites préenregistrées lues dans la mémoire morte.

Les avantages et commentaires énoncés en référence aux différents modes de réalisation du procédé de configuration de l'invention s'appliquent de manière analogue aux différents modes de réalisation de l'entité électronique de l'invention.

Dans un mode de réalisation particulier, les moyens de traitement sont aptes à identifier les données préenregistrées à partir de la commande reçue.

Par ailleurs, les données de configuration peuvent être les données préenregistrées.

Selon au autre mode de réalisation, les moyens de traitement sont aptes à extraire de la commande reçue au moins un identifiant des données préenregistrées.

De plus, l'entité électronique peut, par exemple, correspondre à l'une des entités suivantes :
- une carte à microcircuit,
- une clé USB, ou
- un passeport électronique.

Corrélativement, l'invention concerne un dispositif comprenant des moyens d'envoi d'une commande en écriture à une entité électronique, la réception de la commande par l'entité électronique déclenchant un procédé de configuration tel que mentionné ci-avant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite représente, de manière schématique, une carte à microcircuit conventionnelle ;
- la figure 2 représente, de manière schématique, l'architecture matérielle d'une carte à microcircuit conforme à un mode de réalisation particulier de l'invention ;
- la figure 3 représente, de manière schématique, des données préenregistrées conformes à l'invention qui sont stockées dans des registres de la mémoire morte de la carte 200 illustrée en figure 2 ;
- la figure 4 représente, de manière schématique, l'architecture matérielle d'un lecteur de carte conforme à un mode de réalisation particulier de l'invention ;
- la figure 5 représente un exemple de tableau de correspondance enregistré dans la mémoire interne du lecteur de carte de la figure 4 conformément à un mode de réalisation particulier de l'invention ;
- la figure 6 représente, sous forme d'un organigramme, les principales étapes d'un procédé de configuration et les principales étapes d'un procédé de personnalisation ou de pré-personnalisation conformes à un mode de réalisation particulier de l'invention.

### Description détaillée de plusieurs modes de réalisation

La présente invention concerne la configuration d'une entité électronique, et concerne plus particulièrement les étapes de pré-personnalisation et/ou de personnalisation réalisées par un fabricant sur une carte à microcircuit après sa fabrication, ainsi que les étapes de post-personnalisation réalisées ultérieurement lorsque la carte à microcircuit est fonctionnelle.

A noter que, dans ce document, on désignera par « données de pré-personnalisation » et « données de personnalisation » des données de configuration à écrire dans la mémoire non volatile réinscriptible d'une carte à microcircuit lors respectivement des étapes de pré-personnalisation et de personnalisation.

Dans ce document, des exemples de mise en oeuvre de l'invention sont décrits dans le cadre de la pré-personnalisation et de la personnalisation d'une carte à microcircuit.

Comme indiqué plus en détail ultérieurement, on comprendra cependant que l'invention ne s'applique pas de manière exclusive à une étape de pré-personnalisation et/ou à une étape de personnalisation mais peut être mise en oeuvre dans le cadre d'une configuration quelconque. De même, l'invention ne s'applique pas exclusivement aux cartes à microcircuit mais concerne plus généralement les entités électroniques de type quelconque.

Toujours en référence à la figure 1, le Déposant a observé que, dans le cadre notamment de cartes à microcircuit mono-applicatives natives, les données de configuration à écrire dans la mémoire EEPROM 108 varient très peu d'une carte à une autre.

Plus précisément, le Déposant a constaté que les données de pré-personnalisation varient très peu selon les clients, lots et produits considérés.

De même, le Déposant a constaté que certaines données de personnalisation changent très peu d'une carte à une autre. En particulier, les données de personnalisation se rapportant à la structure de fichiers à mémoriser dans la mémoire EEPROM 108 varient généralement très peu lorsque les cartes comportent des systèmes de fichiers normalisés. En effet, les noms de fichiers et de répertoires sont généralement imposés par la norme adoptée par le fabricant de cartes. Ceci est notamment le cas lorsque les cartes à microcircuit sont conformes à la norme EMV pour « Europay Mastercard Visa » (dans le domaine des cartes bancaires) ou LDS pour « Logical Data Structure » (dans le domaine de l'identification de personnes).

Aussi, le Déposant a développé un procédé de configuration d'une carte à microcircuit permettant de pré-personnaliser et/ou de personnaliser une carte à microcircuit à partir de données dites préenregistrées, c'est-à-dire, des données intégrées à l'avance dans la mémoire morte de la carte. Comme indiqué plus en détails ultérieurement, le procédé de configuration de l'invention permet avantageusement de réduire le nombre de commandes en écriture envoyées à la carte à microcircuit lors de sa configuration par le fabricant de cartes.

La **figure 2** représente, de manière schématique, l'architecture matérielle d'une carte à microcircuit 200 conforme à un mode de réalisation particulier de l'invention. La carte 200 est dans cet exemple conforme à la norme ISO 7816.

Plus particulièrement, la carte à microcircuit 200 comprend un microcontrôleur 202 comportant un processeur 204, une mémoire morte (de type ROM) 206, une mémoire non volatile réinscriptible 208, un port d'entrées et sorties 210 et une mémoire volatile réinscriptible (de type RAM) 212.

Dans l'exemple envisagé ici, la mémoire non volatile réinscriptible 208 est une mémoire de type EEPROM. On comprendra cependant que d'autres types de mémoires non volatiles réinscriptibles pourront être envisagés par l'homme du métier, comme les mémoires de type Flash NAND par exemple.

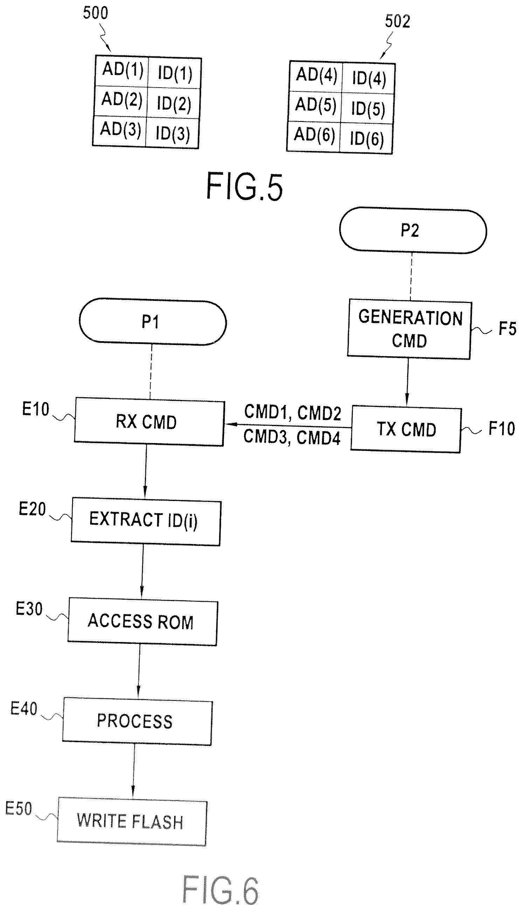

Cette mémoire EEPROM 208 constitue un support d'informations conforme à l'invention. Elle comprend un programme d'ordinateur P1 conforme à un mode de réalisation particulier de l'invention dont les principales étapes E10 à E50 sont représentées en figure 6.

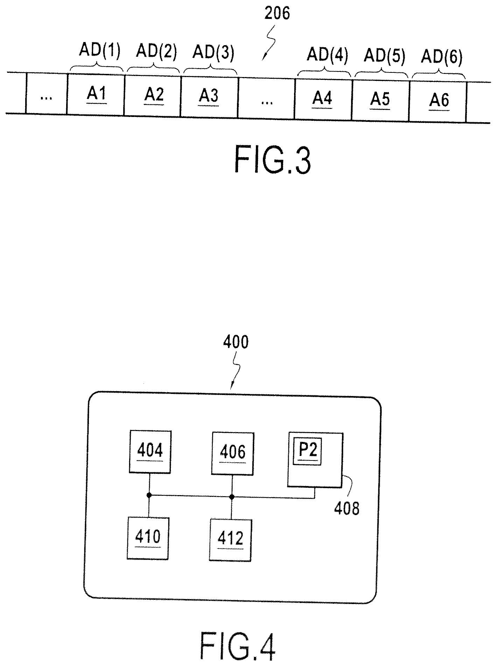

La **figure 4** représente, de manière schématique, l'architecture matérielle d'un lecteur de carte 400 selon un mode de réalisation particulier de l'invention. Ce lecteur de carte 400 est notamment apte à configurer le microcontrôleur 202 de la carte 200.

Plus particulièrement, le lecteur de carte 400 comprend un processeur 404, une mémoire morte (de type ROM) 406, une mémoire non volatile réinscriptible 408, un port d'entrées et sorties 410 et une mémoire volatile réinscriptible (de type RAM) 412.

La carte à microcircuit 200 et le lecteur de carte 400 sont capables de communiquer ensemble à l'aide des ports d'entrées et sorties 210 et 410, respectivement.

Dans l'exemple envisagé ici, la mémoire non volatile réinscriptible 408 est une mémoire de type EEPROM. On comprendra cependant que d'autres types de mémoires non volatiles réinscriptibles pourront être envisagés par l'homme du métier.

Cette mémoire EEPROM 408 constitue un support d'informations conforme à l'invention. Elle comprend un programme d'ordinateur P2 conforme à un mode de réalisation particulier de l'invention dont les principales étapes F5 et F10 sont représentées en figure 6.

Un premier mode de réalisation de l'invention est à présent décrit en référence aux **figures 2 à 6**. Plus précisément, la carte 200 met en oeuvre le procédé de configuration de l'invention en exécutant le programme P1. De même, le lecteur 400 met en oeuvre le procédé de personnalisation ou de pré-personnalisation en exécutant le programme P2.

Dans ce premier exemple de mise en oeuvre, la mémoire morte 206 de la carte 200 comprend trois paquets de données dites préenregistrées notés respectivement A1, A2 et A3.

On comprendra naturellement que l'invention ne se limite pas exclusivement au cas où trois paquets de données préenregistrés sont stockés dans la mémoire morte 206 mais s'applique à un nombre quelconque N de paquets de données préenregistrées, N étant entier supérieur ou égal à 1.

Dans cet exemple, on envisage le cas où les données préenregistrées A1, A2 et A3 stockées dans la mémoire morte 206 sont destinées à la pré-personnalisation de la carte 200. Ces paquets A1, A2 et A3 ont, par exemple, une taille de 128 octets chacun.

La **figure 3** représente, de manière schématique, les données préenregistrées A1, A2 et A3 contenues dans la mémoire morte 206 du microcontrôleur 202. Chacun des paquets de données préenregistrées A1, A2 et A3 est contenu dans une zone spécifique de la mémoire morte 206, chacune de ces zones comprenant au moins un registre. Dans l'exemple considéré ici, les données A1, A2 et A3 sont respectivement enregistrées aux adresses AD(1), AD(2) et AD(3) de la mémoire morte 206. Chacune des adresses AD(1) à AD(3) peut, par exemple, correspondre à l'adresse du premier registre des zones dans lesquelles sont stockées les données A1, A2 et A3, respectivement.

On suppose à présent qu'un fabricant de carte procède à la pré-personnalisation de la carte 200 au moyen du lecteur de cartes 400.

Pour se faire, le lecteur de carte 400 génère une commande en écriture CMD1 (étape F5). Dans l'exemple décrit ici, la commande CMD1 est une commande APDU propriétaire. On comprendra cependant que d'autres types de commande sont envisageables par l'homme du métier.

L'objet de la commande CMD1 est de demander à la carte 200, et plus particulièrement au microcontrôleur 202, de réaliser une pré-personnalisation à partir de données préenregistrées présentes dans la mémoire morte 206.

On envisage ici le cas où le lecteur de carte 400 est configuré pour demander à la carte 200 de réaliser une étape de pré-personnalisation sur la base des données préenregistrées A2 contenues dans la mémoire morte 206. C'est pourquoi, le lecteur 400 insert un identifiant ID(2) dans la commande CMD1 à envoyer au microcontrôleur 202 (étape F5). Cet identifiant ID(2) identifie le paquet de données préenregistrées A2 contenu dans la mémoire morte 206 de la carte 200.

Par ailleurs, on supposera par la suite que des identifiants ID(1) et ID(3) correspondent respectivement aux paquets de données préenregistrées A1 et A3.

Une fois générée, le lecteur de carte 400 envoie la commande CMD1 au microcontrôleur 202 au cours d'une étape d'envoi F10. Cet envoi est réalisé dans cet exemple à l'aide du port d'entrées et sorties 410.

Lorsque le microcontrôleur 202 reçoit la commande CMD1 via son port d'entrées et sorties 210 (étape E10), il réalise tout d'abord des opérations de traitement conventionnelles, comme par exemple :
- la vérification (S110) des autorisations pour effectuer la commande CMD1,
- la vérification (S121) de l'intégrité de la commande CMD1, et
- le déchiffrement des données de la commande CMD1 (analogue à S122).

Le microcontrôleur 202 extrait ensuite, au cours d'une étape E20 de traitement, l'identifiant ID(2) contenu dans la commande CMD1 reçue.

A partir de l'identifiant ID(2) extrait de la commande CMD1 reçue, le microcontrôleur 202 est capable d'identifier les données préenregistrées A2 comme celles devant être prises en compte pour réaliser l'étape de pré-personnalisation (étape E20).

Dans l'exemple considéré ici, on suppose que la mémoire EEPROM 208 de la carte 200 contient la table 500 illustrée en figure 5. La table 500 est un tableau de correspondance contenant, pour chacun des identifiants ID(1), ID(2) et ID(3) susceptibles d'être présents dans la commande CMD1 reçue, l'adresse correspondante notée AD(1), AD(2) et AD(3) respectivement.

Dans cet exemple, les identifiants ID(1) à ID(3) présentent un format quelconque et permettent au microcontrôleur 204 d'identifier une zone ou un registre associé dans la mémoire morte 206.

A noter que la table 500 contenue dans la mémoire EEPROM 208 est toutefois facultative. En effet, d'autres modes de réalisation sont envisageables dans lesquels le tableau 500 n'est pas nécessaire pour que le microcontrôleur 202 identifie le ou les paquets de données préenregistrées à prendre en compte pour réaliser l'étape de pré-personnalisation.

Ainsi, de manière alternative, la mémoire EEPROM 208 peut ne pas contenir de table 500. Dans ce cas, les identifiants ID(1), ID(2) et ID(3) susceptibles d'être présents dans la commande CMD1 sont (ou comprennent) les adresses AD(1), AD(2) et AD(3), respectivement. De cette manière, le microcontrôleur 202 est capable, à partir de l'identifiant ID(2) extrait de la commande CMD1, d'identifier la zone mémoire de la mémoire morte 206 dans laquelle se trouvent les données préenregistrées A2 à prendre en compte, et ce sans faire appel à une table de correspondance telle que la table 500.

Puis, en réponse à la commande CMD1 reçue, le microcontrôleur 202 procède à une étape d'accès E30 au cours de laquelle il récupère les données préenregistrées A2 présentes dans la mémoire morte 206.

Le microcontrôleur 202 copie ensuite les données préenregistrées A2 dans une mémoire tampon dédiée (notée BF) de la mémoire RAM 212. A noter que cette opération nécessite l'appel du programme pilote (ou « driver » en anglais) de la mémoire EEPROM 208 à chaque fois que la mémoire tampon BF est remplie. Une fois remplie, la mémoire BF est réinitialisée. La mémoire BF comprend, par exemple, 64 octets

Dans cet exemple, le microcontrôleur 202 procède en outre à une étape de traitement E40 des données A2 récupérées. On entend ici par « traitement » des données au moins une opération permettant de transformer les données considérée.

A noter par exemple que les données A2 peuvent être stockées sous forme cryptées dans la mémoire morte 206, de sorte qu'un décryptage est nécessaire avant de procéder à l'écriture dans la mémoire EEPROM 208. L'étape de traitement E40 peut également permettre de modifier le format des données A2 ou comprendre toutes autres opérations de traitement visant à préparer l'étape d'écriture à venir dans la mémoire EEPROM 208.

De façon plus générale, l'étape de traitement E40 permet, à partir des données préenregistrées A2, d'obtenir des données de configuration B2 correspondantes.

Une fois l'étape de traitement E40 achevée, le microcontrôleur 202 écrit les données de configuration B2 dans la mémoire EEPROM 208 (étape d'écriture E50).

Le procédé de l'invention permet ainsi d'écrire dans la mémoire EEPROM 208 de la carte 200 des données de pré-personnalisation à partir de données préenregistrées lues dans la mémoire morte 206.

A noter que l'étape de traitement E40 est facultative. En effet, suite à l'étape d'accès E30, le microcontrôleur 202 peut simplement copier les données préenregistrées A2 dans la mémoire tampon BF afin d'écrire directement ces données dans la mémoire EEPROM 208. Dans ce cas particulier, les données de configuration B2 à écrire dans la mémoire EEPROM 208 sont les données préenregistrées A2 récupérées de la mémoire morte 206.

Par ailleurs, la commande CMD1 peut, par exemple, commander au microcontrôleur 202 de prendre en compte, lors d'une étape de pré-personnalisation, des données préenregistrées de la mémoire morte 206 de même nature que celles contenues dans des commandes PUT DATA conventionnelles. Ces données préenregistrées à prendre à compte sont, par exemple, conformes à au moins l'un des types de données suivants :
- des données de configuration du microcontrôleur de la carte (vitesse de fonctionnement du microcontrôleur, ...),
- des données de configuration du protocole de communication de la carte (vitesse de communication de la carte, ...),
- des données de configuration de la mémoire non-volatile réinscriptible de la carte (définition de la limite de taille de la mémoire EEPROM 208, ...).

De plus, la commande en écriture CMD1 peut comprendre une pluralité d'identifiants ID afin de commander à la carte 200 de prendre en compte une pluralité de paquets de données préenregistrées contenus dans la mémoire morte 206 pour effectuer une pré-personnalisation. Ainsi, la commande CMD1 peut par exemple comprendre les identifiants ID(1), ID(2) et/ou ID(3) afin que la carte 200 procède à une pré-personnalisation sur la base des données A1, A2 et/ou A3.

On suppose à présent que la mémoire morte 206 comprend en outre des paquets de données préenregistrées notés A4, A5 et A6 destinées à la personnalisation de la carte 200. Dans cet exemple, chacun de ces paquets de données comprend au moins une arborescence de fichiers et/ou de répertoires préconfigurée.

La **figure 3** représente également, de manière schématique, les paquets de données A4, A5 et A6 contenus dans la mémoire morte 206 du microcontrôleur 202. Chacun des paquets A4, A5 et A6 est contenu dans une zone spécifique de la mémoire morte 206, chacune de ces zones comprenant au moins un registre. Dans l'exemple considéré ici, les données préenregistrées A4, A5 et A6 sont respectivement enregistrées aux adresses AD(4), AD(5) et AD(6) de la mémoire morte 206. Chacune des adresses AD(4) à AD(6) peut, par exemple, correspondre à l'adresse du premier registre des zones dans lesquelles sont stockées les données A4, A5 et A6, respectivement.

On suppose à présent qu'un fabricant de carte procède à la personnalisation de la carte 200 au moyen du lecteur de cartes 400. Cette personnalisation de la carte 200 est réalisée de manière analogue à l'exemple de pré-personnalisation décrit ci-avant.

Plus particulièrement, le lecteur de carte 400 génère (étape F5) une commande en écriture CMD2. Dans l'exemple décrit ici, la commande CMD2 est une commande APDU propriétaire. De même que pour la commande CMD1, d'autres types de commande sont toutefois envisageables pour la commande CMD2.

L'objet de la commande CMD2 est de demander à la carte 200, et plus particulièrement au microcontrôleur 202, de réaliser une personnalisation sur la base de données préenregistrées présentes dans la mémoire morte 206.

On envisage à présent le cas où le lecteur de carte 400 est configuré pour demander à la carte 200 de réaliser une étape de personnalisation sur la base des données préenregistrées A4 contenues dans la mémoire morte 206. C'est pourquoi, le lecteur 400 insert un identifiant ID(4) dans la commande CMD2 à envoyer au microcontrôleur 202 (étape F5). Cet identifiant ID(4) identifie le paquet de données préenregistrées A4 contenu dans la mémoire morte 206 de la carte 200.

Par ailleurs, on supposera par la suite que des identifiants ID(5) et ID(6) correspondent respectivement aux paquets de données préenregistrées A5 et A6.

Une fois générée, le lecteur de carte 400 envoie, au moyen du port d'entrées et sorties 410, la commande CMD2 au microcontrôleur 202 (étape d'envoi F10).

Lorsque le microcontrôleur 202 reçoit via son port d'entrées et sorties 210 la commande CMD2 (étape E10), il réalise tout d'abord des opérations de traitement conventionnelles, comme par exemple :
- la vérification des autorisations pour effectuer la commande CMD2,
- la vérification de l'intégrité de la commande CMD2, et
- le déchiffrement des données de la commande CMD2.

Le microcontrôleur 202 extrait ensuite, au cours d'une étape E20 de traitement, l'identifiant ID(4) contenu dans la commande CMD2 reçue.

A partir de l'identifiant ID(4) extrait de la commande CMD2 reçue, le microcontrôleur 202 est capable d'identifier les données préenregistrées A4 comme celles devant être prises en compte pour réaliser l'étape de personnalisation (étape E20).

Dans l'exemple considéré ici, on suppose que la mémoire EEPROM 208 de la carte 200 contient la table 502 illustrée en figure 5. La table 502 est un tableau de correspondance contenant, pour chacun des identifiants ID(4), ID(5) et ID(6) susceptibles d'être présents dans la commande CMD2 reçue, l'adresse correspondante notée AD(4), AD(5) et AD(6) respectivement.

Dans cet exemple, les identifiants ID(4) à ID(6) présentent un format quelconque et permettent au microcontrôleur 204 d'identifier une zone ou un registre associé dans la mémoire morte 206.

A noter que la table de correspondance 502 contenue dan la mémoire EEPROM 208 est toutefois facultative. En effet, d'autres modes de réalisation sont envisageables dans lesquels le tableau 502 n'est pas nécessaire pour que le microcontrôleur 202 identifie le ou les paquets de données préenregistrées à prendre en compte pour réaliser l'étape de personnalisation.

Ainsi, de manière alternative, la mémoire EEPROM 208 peut ne pas contenir de table 502. Dans ce cas, les identifiants ID(4), ID(5) et ID(6) susceptibles d'être inclus dans la commande CMD2 peuvent être (ou comprendre) les adresses AD(4), AD(5) et AD(6), respectivement. De cette manière, le microcontrôleur 202 est capable, à partir de l'identifiant ID(4) extrait de la commande CMD2, d'identifier la zone mémoire de la mémoire morte 206 dans laquelle se trouvent les données préenregistrées A2 à prendre en compte, et ce sans faire appel à une table de correspondance telle que la table 502.

Puis, en réponse à la commande CMD2 reçue, le microcontrôleur 202 procède à une étape d'accès E30 au cours de laquelle il récupère les données préenregistrées A4 présentes dans la mémoire morte 206.

Le microcontrôleur 202 copie ensuite les données préenregistrées A4 dans une mémoire tampon dédiée (notée BF) de la mémoire RAM 212. Comme indiqué précédemment, cette opération nécessite l'appel du programme pilote (ou « driver » en anglais) de la mémoire EEPROM 208 à chaque fois que la mémoire tampon BF est remplie.

Dans cet exemple, le microcontrôleur 202 procède en outre à une étape de traitement E40 des données A4 récupérées. Comme déjà indiqué ci-avant, les données préenregistrées A4 peuvent être encryptées, et donc nécessiter un décryptage avant de procéder à l'écriture dans la mémoire EEPROM 208. L'étape de traitement E40 peut également permettre de modifier le format des données A4 ou comprendre toutes autres opérations de traitement visant à préparer l'étape d'écriture à venir dans la mémoire EPROM 208.

De façon plus générale, l'étape de traitement E40 permet dans ce cas d'obtenir, à partir des données préenregistrées A4, des données de configuration B4 correspondantes.

Une fois l'étape de traitement E40 achevée, le microcontrôleur 202 écrit les données de configuration B4 dans la mémoire EEPROM 208 (étape d'écriture E50).

A noter que, comme dans la phase de pré-personnalisation, l'étape de traitement E40 est ici facultative. En effet, suite à l'étape d'accès E30, le microcontrôleur 202 peut simplement copier les données préenregistrées A4 dans la mémoire tampon BF afin d'écrire directement ces données dans la mémoire EEPROM 208. Dans ce cas particulier, les données de configuration B4 à écrire dans la mémoire EEPROM 208 sont les données préenregistrées A4 récupérées de la mémoire morte 206.

Le procédé de l'invention permet ainsi d'écrire dans la mémoire EEPROM 208 de la carte 200 des données de personnalisation à partir de données préenregistrées lues dans la mémoire morte 206.

De manière analogue à CMD1, la commande en écriture CMD2 peut comprendre plus d'un identifiant ID afin de commander à la carte 200 de prendre en compte une pluralité de paquets de données préenregistrées dans la mémoire morte 206 pour effectuer une étape de personnalisation. Ainsi, la commande CMD2 peut, par exemple, comprendre les identifiants ID(4), ID(5) et/ou ID(6) afin que la carte 200 procède à une personnalisation sur la base des données A4, A5 et/ou A6.

Par ailleurs, la commande CMD2 peut, par exemple, commander au microcontrôleur 202 de prendre en compte, lors d'une étape de personnalisation, des données préenregistrées de la mémoire morte 206 de même nature que celles contenues dans des commandes conventionnelles de type CREATE FILE ou UPDATE BINARY. Ces données préenregistrées à prendre en compte sont, par exemple, des données personnelles comme décrites précédemment, ou des données relatives à une arborescence de fichiers et/ou de répertoires.

Par ailleurs, les paquets de données préenregistrées A4, A5 et A6 contenus dans la mémoire morte 206 de la carte 200 peuvent chacun comprendre au moins un script (ou programme d'exécution). Ces scripts comprennent notamment un ou plusieurs champs de données (ou « command data field ») conventionnels de commandes en écriture internes, de type APDU par exemple.

Dans ce cas, lorsque le microcontrôleur 202 reçoit à l'étape E10 la commande CMD2, il réalise tout d'abord des opérations de traitement conventionnelles comme par exemple :
- la vérification des autorisations pour effectuer la commande CMD2,
- la vérification de l'intégrité de la commande CMD2, et
- le déchiffrement des données de la commande CMD2.

Le microcontrôleur 202 extrait ensuite à l'étape E20 le ou les identifiants ID(i) compris dans la commande CMD2 reçue. Dans cet exemple, on supposera que l'identifiant ID(4) est extrait de la commande CMD2 lors de l'étape E20. A partir de l'identifiant ID(4), le microcontrôleur 202 détermine que le paquet de données préenregistrées A4 doit être pris en compte pour procéder à l'étape de personnalisation. Le microcontrôleur 202 exécute alors le script (noté script4) contenu dans le paquet A4. Ce script permet par exemple d'exécuter deux corps de commandes APDU (de type CREATE FILE et UPDATE BINARY, par exemple) contenus dans le paquet de données A4.

A titre d'exemple, le script4 peut se présenter de la manière suivante :
- vérification de l'intégrité de la commande préenregistrée A4 (cette étape pouvant comprendre la vérification d'une signature, de type MAC par exemple),
- déchiffrement des données de configuration préenregistrées A4,
- copie des données A4 déchiffrées dans la mémoire tampon BF
- appel du driver de la mémoire EEPROM 208 pour écrire le contenu de la mémoire tampon BF dans la mémoire EEPROM 208,
- autres traitements...

Chaque script permet au microcontrôleur 202 de réaliser les étapes E30 à E50 en relation avec le paquet de données préenregistrées correspondant. Dans cet exemple, le script4 permet de réaliser les étapes E30 à E50 en relation avec le paquet A4 contenu dans la mémoire morte 206.

Ce mode de réalisation est avantageux en ce que le paquet A4 comprend dans la mémoire morte 206 tous les paramètres nécessaires à l'exécution du script4. Ces paramètres sont simplement identifiés à l'aide de l'identifiant ID(4) extrait de la commande CMD2 reçue.

Il convient également de noter qu'il n'est pas obligatoire que le lecteur de carte 400 insert un identifiant ID(i) dans la commande d'écriture CMD1 ou CMD2 lors de l'étape de génération F5 (i étant un entier compris entre 1 et 6 dans cet exemple).

Ainsi, selon un deuxième mode de réalisation, le lecteur de carte 400 ne connaît pas d'identifiant ID(i). Dans ce cas, les commandes en écriture générées par le lecteur 400 lors de l'étape F5 ne contiennent aucun identifiant permettant au microcontrôleur 202 d'identifier les données préenregistrées à prendre en compte pour se configurer.

On considère par exemple le cas où un seul paquet (noté A1) de données de pré-personnalisation préenregistrées et un seul paquet (noté A4) de données de personnalisation préenregistrées sont stockés dans la mémoire morte 206 du microcontrôleur 202.

Dans ce cas, la commande en écriture notée CMD3 envoyée par le lecteur de carte 400 au cours de l'étape F10 ne contient aucun identifiant correspondant ID(1) ou ID(4). Cette commande CMD3 (commande propriétaire de type APDU par exemple) envoyée par le lecteur 400 indique simplement au microcontrôleur 202 qu'il doit se configurer à partir de données préenregistrées présente dans sa mémoire morte (i.e. la mémoire morte 206).

Plus précisément, la commande CMD3 reçue à l'étape E10 indique, par exemple, au microcontrôleur 202 qu'il doit réaliser une pré-personnalisation à partir de données préenregistrées (non identifiées dans la commande CMD3) contenues dans la mémoire morte 206. Dans ce cas, A1 est le seul paquet de données préenregistrées contenu dans la mémoire morte 206 qui est destiné à la pré-personnalisation de la carte 200. Par conséquent, le microcontrôleur 202 déduit de la commande CMD3 reçue qu'il doit effectuer une pré-personnalisation à partir des données préenregistrées A1. Aucune étape E20 d'extraction d'un identifiant n'est ici réalisée : le microcontrôleur passe directement de l'étape E10 à l'étape E30. Au cours de cette étape E30, le microcontrôleur 202 lie dans la mémoire morte 206 les données préenregistrées A1, puis procède aux étapes E40 et E50 comme dans le premier mode de réalisation décrit précédemment. Comme indiqué précédemment, l'étape E40 est facultative.

De manière analogue, la commande CMD3 peut indiquer au microcontrôleur 202 qu'il doit réaliser une personnalisation à partir de données préenregistrées (non identifiées dans la commande CMD) contenues dans la mémoire morte 206. Dans ce cas, A4 est le seul paquet de données préenregistrées contenu dans la mémoire morte 206 qui est destiné à la personnalisation de la carte 200. Par conséquent, le microcontrôleur 202 déduit de la commande CMD3 reçue qu'il doit effectuer une personnalisation à partir des données préenregistrées A4. De même que ci-dessus, aucune étape E20 d'extraction d'un identifiant n'est ici réalisée : le microcontrôleur passe directement de l'étape E10 à l'étape E30. Au cours de cette étape E30, le microcontrôleur 202 lie dans la mémoire morte 206 les données préenregistrées A4, puis procède aux étapes E40 et E50 comme dans le premier mode de réalisation décrit précédemment. Comme indiqué précédemment, l'étape E40 est facultative.

Par ailleurs, les exemples de mise en oeuvre décrits ci-avant sont réalisés dans le cadre d'une pré-personnalisation ou d'une personnalisation d'une carte à microcircuit. On notera cependant que la présente invention peut également s'appliquer dans le cadre d'une phase quelconque de configuration, telle qu'une phase de post-personnalisation d'une carte à microcircuit par exemple.

A titre d'exemple, l'invention peut s'appliquer à une carte SIM disposée dans un téléphone mobile (ou tous autres équipements de communication mobile), cette carte SIM comprenant une mémoire morte et une mémoire non volatile réinscriptible. Il est ainsi possible de recevoir sous forme d'un message (de type SMS par exemple) au moins une commande conforme à l'invention. La carte SIM est alors configurée pour écrire dans sa mémoire non volatile réinscriptible, en réponse à cette commande, des données de configuration obtenues à partir de données préenregistrées lues dans sa mémoire morte.

Cette variante permet ainsi de configurer à distance une carte à microcircuit pendant sa phase de vie, c'est-à-dire dans sa phase fonctionnelle ultérieure à la phase de personnalisation.

D'autre part, on peut envisager le cas où le microcontrôleur 202 procède à une pré-personnalisation et à une personnalisation en réponse à une seule commande en écriture reçue lors de l'étape E10.

Ainsi, dans une alternative au premier mode de réalisation, le lecteur de carte 400 génère une commande CMD4 lors de l'étape F5, cette commande comprenant par exemple les identifiant ID(2) et ID(4). Comme indiqué précédemment, les identifiants ID(2) et ID(4) correspondent ici aux paquets de données préenregistrées A2 et A4 destinés respectivement à la pré-personnalisation et à la personnalisation du microcontrôleur 202.

Une fois les identifiants ID(2) et ID(4) extraits de la commande CMD4 lors de l'étape E20, le microcontrôleur 202 procède à une pré-personnalisation puis à une personnalisation. Par exemple, après l'étape E30, le microcontrôleur lie les données préenregistrées A2 dans la mémoire morte 206 (étape E30) et écrit les données B2 (obtenues à partir des données A2) dans la mémoire EEPROM 208 (étape E50). Par la suite, le microcontrôleur 202 réalise à nouveau les étapes E30 à E50 afin de procéder à la personnalisation. Pour se faire, le microcontrôleur 202 lie cette fois les données préenregistrées A4 dans la mémoire morte 206 (étape E30) et écrit les données B4 (obtenues à partir des données A4) dans la mémoire EEPROM 208 (E50).

Dans une alternative au deuxième mode de réalisation, la commande CMD4 reçue à l'étape E10 ne contient pas d'identifiant ID(i). Dans ce cas, le microcontrôleur 202 détecte à l'étape E20 l'absence d'identifiant ID(i) dans la commande CMD4 reçue et en déduit qu'une pré-personnalisation et une personnalisation doivent être réalisées à partir respectivement des seules données préenregistrées A2 et A4 destinées à la pré-personnalisation et à la personnalisation de la carte 200. Une fois les données préenregistrées A2 et A4 identifiées dans la mémoire morte 206, le microcontrôleur 202 procède aux étapes de pré-personnalisation et de personnalisation.

Pour se faire, après l'étape E30, le microcontrôleur lie les données préenregistrées A2 dans la mémoire morte 206 (étape E30) et écrit les données B2 (obtenues à partir des données A2) dans la mémoire EEPROM 208 (étape E50). Le microcontrôleur 202 lie ensuite les données préenregistrées A4 dans la mémoire morte 206 (étape E30) et écrit les données B4 (obtenues à partir des données A4) dans la mémoire EEPROM 208 (E50).

D'autre part, les mises en oeuvre de l'invention décrites ci-avant concernent une carte à microcircuit. On comprendra cependant que l'invention peut s'appliquer à d'autres types d'entités électroniques comprenant une mémoire morte et une mémoire non volatile réinscriptible. L'invention peut s'appliquer, par exemple, à une clé USB ou à un passeport électronique.

De même, le lecteur de carte 400 peut correspondre à un dispositif quelconque comprenant des moyens pour envoyer une commande en écriture conforme à l'invention à une entité électronique telle que la carte à microcircuit 200, par exemple. Un tel dispositif peut correspondre, par exemple, à un ordinateur comprenant un port USB capable de communiquer avec une clé USB conforme à l'invention.

La présente invention est avantageuse en ce qu'elle permet de réduire considérablement le nombre de commandes en écriture à envoyer à une entité électronique, telle qu'une carte à microcircuit, afin de la configurer lors d'une étape de configuration telle qu'une étape de pré-personnalisation, une étape de personnalisation et/ou une étape de post-personnalisation.

En conséquence, le temps d'exécution nécessaire pour configurer une entité électronique telle qu'une carte à microcircuit, lors de la pré-personnalisation, de personnalisation et/ou de la post-personnalisation, est réduit de manière significative. En effet, l'invention permet de s'affranchir, au niveau de la carte à configurer, d'un grand nombre d'opérations de traitement inhérentes à chaque commande en écriture reçue depuis le lecteur de carte associé. La réduction du nombre de commandes envoyées à la carte à configurer permet notamment de limiter le nombre d'opérations de traitement protocolaire, de vérification de l'intégrité, de vérification de la signature de la commande et de déchiffrement des données. L'invention permet en outre de limiter sensiblement le nombre d'appels du « driver » de la mémoire non-volatile réinscriptible (telle que l'EEPROM 208) lors des étapes de configuration d'une entité électronique (telle que la carte 200).

L'invention peut ainsi permettre de diminuer avantageusement le coût de production des cartes à microcircuit.

## Revendications

1. Procédé de configuration mis en oeuvre par une entité électronique (200) comprenant une mémoire non volatile réinscriptible (208) et une mémoire morte (206), ledit procédé comprenant :
la réception (E10) d'au moins une commande (CMD1, CMD2) en écriture pour écrire dans la mémoire non-volatile, et
en réponse à ladite commande, l'écriture (E50) dans la mémoire non volatile de données de configuration (B2, B4), le procédé étant **caractérisé en ce que**
les données de configuration sont obtenues à partir de données (A2, A4) dites préenregistrées lues dans la mémoire morte,
dans lequel les données préenregistrées lues dans la mémoire morte sont des données destinées à une pré-personnalisation, à une personnalisation ou à une post-personnalisation de l'entité électronique, et
dans lequel l'entité électronique (200) déduit les données préenregistrées (B2, B4) à lire dans la mémoire morte (206) à partir de ladite commande.

2. Procédé selon la revendication 1 comprenant en outre, une étape d'identification (E20) desdites données préenregistrées à partir de la commande reçue.

3. Procédé selon la revendication 1 ou 2, dans lequel les données de configuration sont lesdites données préenregistrées.

4. Procédé selon la revendication 1 ou 2, dans lequel l'entité électronique effectue (E40) au moins un traitement des données préenregistrées afin d'obtenir les données de configuration.

5. Procédé selon l'une quelconque des revendications 1 à 4, dans lequel la commande comprend au moins un identifiant (ID(2), ID(4)) desdites données préenregistrées.

6. Procédé selon la revendication 5, dans lequel ledit identifiant identifie un registre de la mémoire morte permettant d'identifier une zone comportant lesdites données préenregistrées.

7. Procédé selon l'une quelconque des revendications 1 à 6, dans lequel ladite commande est une commande APDU conforme à la norme ISO 7816.

8. Procédé selon l'une quelconque des revendications 1 à 7, dans lequel l'entité électronique correspond à l'une des entités suivantes :
- une carte à microcircuit,
- une clé USB, ou
- un passeport électronique.

9. Procédé selon l'une quelconque des revendications 1 à 8, dans lequel une seule commande en écriture est reçue lors de l'étape de réception, lesdites données de configuration étant des données de pré-personnalisation et de personnalisation.

10. Procédé de personnalisation, de pré-personnalisation ou de post-personnalisation mis en oeuvre par un dispositif (400) comprenant des moyens de communication (410) avec une entité électronique (200), ledit procédé comprenant l'envoi d'une commande (CMD1, CMD2) pour configurer ladite entité électronique selon un procédé de configuration conforme à l'une quelconque des revendications 1 à 9.

11. Programme d'ordinateur (P1 ; P2) comportant des instructions pour l'exécution des étapes d'un procédé selon l'une quelconque des revendications 1 à 10 lorsque ledit programme est exécuté par un ordinateur.

12. Support d'enregistrement (208 ; 408) lisible par un ordinateur sur lequel est enregistré un programme d'ordinateur (P1 ; P2) comprenant des instructions pour l'exécution des étapes d'un procédé selon l'une quelconque des revendications 1 à 10.

13. Entité électronique (200) comprenant une mémoire non volatile réinscriptible (208), une mémoire morte (206), des moyens de réception (210) d'au moins une commande en écriture (CMD1, CMD2) pour écrire dans la mémoire non-volatile et des moyens de traitement (204) pour écrire, en réponse à la commande, des données de configuration (B2, B4) dans la mémoire non volatile, ladite entité étant **caractérisée en ce que** :
les moyens de traitement sont aptes à obtenir lesdites données de configuration à partir de données (A2, A4) dites préenregistrées lues dans la mémoire morte, dans lequel les données préenregistrées lues dans la mémoire morte sont des données destinées à une pré-personnalisation, à une personnalisation ou à une post-personnalisation de l'entité électronique, et
dans lequel l'entité électronique (200) est configurée pour déduit les données préenregistrées (B2, B4) à lire dans la mémoire morte (206) à partir de ladite commande.

14. Entité électronique selon la revendication 13, dans laquelle les moyens de traitement sont aptes à identifier les données préenregistrées à partir de la commande reçue.

15. Entité électronique selon la revendication 13 ou 14, dans laquelle les données de configuration sont lesdites données préenregistrées.

16. Entité électronique selon l'une quelconque des revendications 13 à 15, dans laquelle les moyens de traitement sont aptes à extraire de la commande reçue au moins un identifiant (ID(2), ID(4)) desdites données préenregistrées.

17. Entité électronique selon l'une quelconque des revendications 13 à 16, dans lequel l'entité électronique correspond à l'une des entités suivantes :
- une carte à microcircuit,
- une clé USB, ou
- un passeport électronique.

18. Dispositif (400) comprenant des moyens d'envoi (410, 404) d'une commande en écriture (CMD1, CMD2) à une entité électronique (200), la réception de ladite commande par ladite entité électronique déclenchant un procédé de configuration selon l'une quelconque des revendications 1 à 9.

## Patentansprüche

1. Konfigurationsverfahren, welches von einer elektronischen Einheit (200) vorgenommen wird, die einen wiederbeschreibbaren nicht-flüchtigen Speicher (208) und einen Festwertspeicher (206) umfasst, wobei das Verfahren umfasst:
Empfangen (E10) mindestens eines Schreibbefehls (CMD1, CMD2) zum Schreiben in den nicht-flüchtigen Speicher und
ansprechend auf den Befehl, Schreiben (E50) von Konfigurationsdaten (B2, B4) in den nicht-flüchtigen Speicher, wobei das Verfahren **dadurch gekennzeichnet ist, dass**:
die Konfigurationsdaten aus als zuvor aufgezeichnet bezeichneten Daten (A2, A4) erhalten werden, die in dem Festwertspeicher gelesen werden,
wobei die zuvor aufgezeichneten Daten, die in dem Festwertspeicher gelesen werden, Daten sind, die für eine Prä-Personalisierung, für eine Personalisierung oder für eine Post-Personalisierung der elektronischen Einheit bestimmt sind, und
wobei die elektronische Einheit (200) die zuvor aufgezeichneten Daten (B2, B4), die in dem Festwertspeicher (206) zu lesen sind, aus dem Befehl ableitet.

2. Verfahren nach Anspruch 1, außerdem umfassend einen Identifikationsschritt (E20) der zuvor aufgezeichneten Daten aus dem empfangenen Befehl.

3. Verfahren nach Anspruch 1 oder 2, wobei die Konfigurationsdaten die zuvor aufgezeichneten Daten sind.

4. Verfahren nach Anspruch 1 oder 2, wobei die elektronische Einheit mindestens eine Behandlung der zuvor aufgezeichneten Daten durchführt (E40), um die Konfigurationsdaten zu erhalten.

5. Verfahren nach einem der Ansprüche 1 bis 4, wobei der Befehl mindestens einen Identifikator (ID(2), ID(4)) der zuvor aufgezeichneten Daten umfasst.

6. Verfahren nach Anspruch 5, wobei der Identifikator ein Register des Festwertspeichers identifiziert, wodurch es ermöglicht wird, einen Bereich zu identifizieren, der die zuvor aufgezeichneten Daten umfasst.

7. Verfahren nach einem der Ansprüche 1 bis 6, wobei der Befehl ein APDU-Befehl gemäß der Norm ISO 7816 ist.

8. Verfahren nach einem der Ansprüche 1 bis 7, wobei die elektronische Einheit einer der folgenden Einheiten entspricht:
- einer Chipkarte,
- einem USB-Stick oder
- einem elektronischen Pass.

9. Verfahren nach einem der Ansprüche 1 bis 8, wobei ein einzelner Schreibbefehl während des Empfangsschritts empfangen wird, wobei die Konfigurationsdaten Prä-Personalisierungsdaten und Personalisierungsdaten sind.

10. Verfahren zur Personalisierung, Prä-Personalisierung oder Post-Personalisierung, welches von einer Vorrichtung (400) durchgeführt wird, die Kommunikationsmittel (410) mit einer elektronischen Einheit (200) umfasst, wobei das Verfahren das Senden eines Befehls (CMD1, CMD2) umfasst, um die elektronische Einheit gemäß einem Konfigurationsverfahren nach einem der Ansprüche 1 bis 9 zu konfigurieren.

11. Computerprogram (P1; P2), umfassend Instruktionen zur Ausführung der Schritte eines Verfahrens nach einem der Ansprüche 1 bis 10, wenn das Programm von einem Computer ausgeführt wird.

12. Aufzeichnungsmedium (208; 408), welches von einem Computer gelesen werden kann, auf welchem ein Computerprogramm (P1; P2) aufgezeichnet ist, das Instruktionen zur Ausführung der Schritte eines Verfahrens nach einem der Ansprüche 1 bis 10 umfasst.

13. Elektronische Einheit (200), umfassend einen wiederbeschreibbaren nicht-flüchtigen Speicher (208), einen Festwertspeicher (206), Mittel (210) zum Empfangen mindestens eines Schreibbefehls (CMD1, CMD2) zum Schreiben in den nicht-flüchtigen Speicher und Behandlungsmittel (204), um, ansprechend auf den Befehl, Konfigurationsdaten (B2, B4) in den nicht-flüchtigen Speicher zu schreiben, wobei die Einheit **dadurch gekennzeichnet ist, dass**:
die Behandlungsmittel geeignet sind, die Konfigurationsdaten aus als zuvor aufgezeichnet bezeichneten Daten (A2, A4) zu erhalten, die in dem Festwertspeicher gelesen werden, wobei die zuvor aufgezeichneten Daten, die in dem Festwertspeicher gelesen werden, Daten sind, die für eine Prä-Personalisierung, für eine Personalisierung oder für eine Post-Personalisierung der elektronischen Einheit bestimmt sind, und
wobei die elektronische Einheit (200) ausgelegt ist, die zuvor aufgezeichneten Daten (B2, B4), die in dem Festwertspeicher (206) zu lesen sind, aus dem Befehl abzuleiten.

14. Elektronische Einheit nach Anspruch 13, wobei die Behandlungsmittel geeignet sind, die zuvor aufgezeichneten Daten aus dem empfangenen Befehl zu identifizieren.

15. Elektronische Einheit nach Anspruch 13 oder 14, wobei die Konfigurationsdaten die zuvor aufgezeichneten Daten sind.

16. Elektronische Einheit einem der Ansprüche 13 bis 15, wobei die Behandlungsmittel geeignet sind, aus dem empfangenen Befehl mindestens einen Identifikator (ID(2), ID(4)) der zuvor aufgezeichneten Daten zu extrahieren.

17. Elektronische Einheit einem der Ansprüche 13 bis 16, wobei die elektronische Einheit einer der folgenden Einheiten entspricht:
- einer Chipkarte,
- einem USB-Stick oder
- einem elektronischen Pass.

18. Vorrichtung (400), umfassend Mittel (410, 404) zum Senden eines Schreibbefehls (CMD1, CMD2) an eine elektronische Einheit (200), wobei der Empfang des Schreibbefehls durch die elektronische Einheit ein Konfigurationsverfahren nach einem der Ansprüche 1 bis 9 auslöst.

## Claims

1. A configuration method implemented by an electronic entity (200) comprising a rewritable non-volatile memory (208) and a read-only memory (206), said method comprising the steps of:
receiving (E10) at least one write-command (CMD1, CMD2) to write in the non-volatile memory, and
in response to said command, writing (E50) configuration data (B2, B4) in the non-volatile memory, the method being **characterized in that**
the configuration data are obtained from data (A2, A4) called prerecorded data read from the read-only memory,
wherein the prerecorded data read from the read-only memory are data intended for a pre-personalization, personalization or post-personalization of the electronic entity, and
wherein the electronic entity (200) derives from said command the prerecorded data (B2, B4) to be read from the read-only memory (206).

2. The method according to claim 1 further comprising a step of identifying (E20) said prerecorded data from the received command.

3. The method according to claim 1 or 2, wherein the configuration data are said prerecorded data.

4. The method according to claim 1 or 2, wherein the electronic entity performs (E40) at least one processing of the prerecorded data in order to obtain the configuration data.

5. The method according to any one of claims 1 to 4, wherein the command comprises at least one identifier (ID(2), ID(4)) of said prerecorded data.

6. The method according to claim 5, wherein said identifier identifies a register of the read-only memory allowing to identify an area including said prerecorded data.

7. The method according to any one of claims 1 to 6, wherein said command is an APDU command in accordance with the ISO 7816 standard.

8. The method according to any one of claims 1 to 7, wherein the electronic entity corresponds to one of the following entities:
- a microcircuit card,
- a USB key, or
- an electronic passport.

9. The method according to any one of claims 1 to 8, wherein only one write-command is received during the receiving step, said configuration data being pre-personalization and personalization data.

10. A personalization, pre-personalization or post-personalization method implemented by a device (400) comprising means for communicating (410) with an electronic entity (200), said method comprising sending a command (CMD1, CMD2) to configure said electronic entity according to a configuration method in accordance with any one of claims 1 to 9.

11. A computer program (P1; P2) including instructions for performing the steps of a method according to any one of claims 1 to 10 when said program is executed by a computer.

12. A recording medium (208; 408) readable by a computer on which a computer program (P1; P2) is recorded comprising instructions for performing the steps of a method according to any one of claims 1 to 10.

13. An electronic entity (200) comprising a rewritable non-volatile memory (208), a read-only memory (206), means for receiving (210) at least one write-command (CMD1, CMD2) to write in the non-volatile memory and processing means (204) to write, in response to the command, configuration data (B2, B4) in the non-volatile memory, said entity being **characterized in that**:
the processing means are able to obtain said configuration data from data (A2, A4) called prerecorded data read from the read-only memory, wherein the pre-recorded data read from the read-only memory are data intended for a pre-personalization, personalization or post-personalization of the electronic entity, and
wherein the electronic entity (200) is configured to derive from said command the prerecorded data (B2, B4) to be read from the read-only memory (206).

14. The electronic entity according to claim 13, wherein the processing means are able to identify the prerecorded data from the received command.

15. The electronic entity according to claim 13 or 14, wherein the configuration data are said prerecorded data.

16. The electronic entity according to any one of claims 13 to 15, wherein the processing means are able to extract from the received command at least one identifier (ID(2), ID(4)) of said prerecorded data.

17. The electronic entity according to any one of claims 13 to 16, wherein the electronic entity corresponds to one of the following entities:
- a microcircuit card,
- a USB key, or
- an electronic passport.

18. A device (400) comprising means for sending (410, 404) a write-command (CMD1, CMD2) to an electronic entity (200), the receipt of said command by said electronic entity triggering a configuration method according to any one of claims 1 to 9.
